# EUROPÄISCHE PATENTANMELDUNG

(11) **EP 0 855 598 A2**
(43) Veröffentlichungstag der Anmeldung: **29.07.1998**
(21) Anmeldenummer: 98100035.9
(22) Anmeldetag: 03.01.1998
(51) Int. Cl.: G01R 31/04

(54) **Überwachungseinrichtung mit Überwachungsschaltern**

(30) Priorität: 22.01.1997 DE 19702009
(71) Anmelder: K.A. SCHMERSAL GmbH & Co., D-42279 Wuppertal (DE)
(72) Erfinder: Kienapfel, Udo, 40625 Düsseldorf (DE); Orkopoulos, Stawros, 42399 Wuppertal (DE); Recke, Herbert, 42109 Wuppertal (DE)
(74) Vertreter: Sparing - Röhl - Henseler Patentanwälte

(57) **Zusammenfassung**

Die Erfindung betrifft eine Überwachungseinrichtung mit wenigstens einer Gruppe von n (n>1) bei Betätigung öffnenden oder schließenden Überwachungschaltern (1', 1''), die jeweils an eine elektrische Versorgungsquelle (2) angeschlossen und mit mindestens einer auf den jeweiligen Schalterausgang ansprechenden Auswerteeinheit (4) gekoppelt sind. Zur Querschlußüberwachung ist vorgesehen, daß die Spannungsversorgung von mindestens einem Überwachungsschalter (1', 1'') jeder Gruppe über jeweils einen Taktgeber (5) getaktet ist, wobei die Auswerteeinheit(en) (4) die durch den entsprechenden Taktgeber (5) bewirkte Potentialänderung des Ausgangs des getakteten, geschlossenen Überwachungsschalters (1'') und den gleichzeitigen auf Spannung liegenden Ausgang des wenigstens einen weiteren Überwachungsschalters (1') überprüft.

## Beschreibung

Die Erfindung betrifft eine Überwachungseinrichtung mit Überwachungsschaltern nach dem Oberbegriff des Anspruchs 1.

Bei derartigen Überwachungseinrichtungen, die über entsprechende Überwachungsschalter beispielsweise die geöffnete oder geschlossene Stellung von Schutzabdeckungen wie Schutztüren, Deckel etc. von Maschinen od.dgl. überwachen, ist es möglich, daß die Leitungen von Kontakten von Überwachungsschaltern eingeklemmt werden, wodurch ein Querschluß entstehen kann. Um einen solchen oder auf andere Weise entstandenen Querschluß zu erkennen, ist es einerseits bekannt, einen Überwachungsschalter mit einer positiven Spannung von beispielsweise +24V zu beaufschlagen, während in gegebenenfalls nicht erwünschter Weise der andere OV schaltet, so daß im Querschlußfall ein Kurzschluß auftritt, wodurch der Fehler bemerkt wird.

Ferner ist es bekannt, an einer jeweiligen Schutzabdeckung zwei Überwachungsschalter anzuordnen, von denen einer als Öffner und der andere als Schließer arbeitet. Im Querschlußfall würden beide Leitungspegel der Schalterausgänge das gleiche Potential annehmen und ein dadurch bewirkter Kurzschluß erkennbar.

Aus der DE-C-3 241 492 ist eine Schaltungsanordnung bekannt, bei der die zu überwachenden Schalter an eine Versorgungsleitung sowie an einen Prozessor angeschlossen sind. Hierbei werden die Schaltzustände der Schalter durch Abfrageimpulse zyklisch abgefragt, die jeweils über eine Kodierleitung dem Prozessor zugeführt werden. Der Prozessor erkennt die Kombination der Impulse auf der Kodierleitung und erhält so die Information, welche Schaltergruppe gerade abgefragt worden ist. Zwar kann die Abfrage der Schaltzustände in einem sehr kurzen Zeitraum erfolgen, eine gleichzeitige Kontrolle der Schalter auf ihre ordnungsgemäße Funktion ist bei dieser Schaltungsanordnung jedoch nicht möglich.

Aufgabe der Erfindung ist es, eine Überwachungseinrichtung nach dem Oberbegriff des Anspruchs 1 zu schaffen, die eine gleichzeitige Querschlußüberwachung bei Überwachungsschaltern, die mit einer von null verschiedenen (positiven) Spannung beaufschlagt sind, ermöglicht.

Diese Aufgabe wird entsprechend dem kennzeichnenden Teil des Anspruchs 1 gelöst.

Weitere Ausgestaltungen der Erfindung sind der nachfolgenden Beschreibung und den Unteransprüchen zu entnehmen.

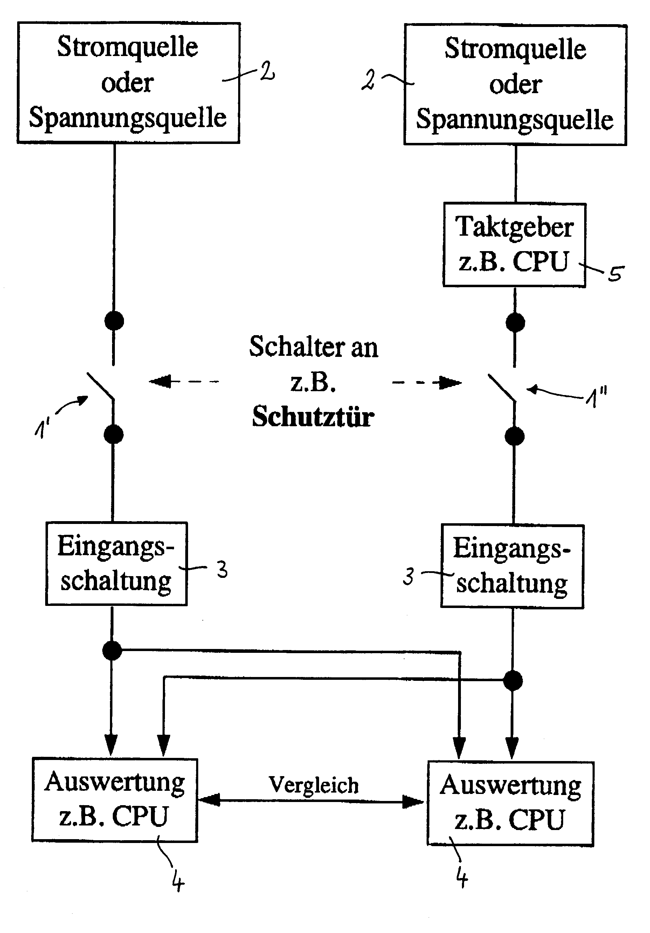

Die Erfindung wird nachstehend anhand eines in der beigefügten Abbildung dargestellten Ausführungsbeispiels näher erläutert, die schematisch ein Schaltbild einer Überwachungseinrichtung für Schutzabdeckungen wie Schutztüren, Deckel etc. zeigt.

Hierbei sind zwei, eine Gruppe bildende, bei Betätigung öffnende Überwachungsschalter 1', 1'' für eine Schutzabdeckung vorgesehen, d.h. die Überwachungsschalter 1', 1'' sind bei geschlossener Schutzabdeckung geschlossen.

Beide Überwachungsschalter 1', 1'' sind an eine elektrische Versorgungsquelle 2 angeschlossen. Hierbei kann es sich um eine Gleichspannungsquelle oder auch zum Begrenzen des Stroms im Kurzschlußfall um eine Gleichstromquelle handeln. Man kann vorteilhaft auch für jeden Überwachungsschalter 1', 1'' dieselbe Versorgungsquelle 2 verwenden.

Die Ausgangsklemmen der Überwachungsschalter 1', 1'' sind über eine Eingangsschaltung 3 mit einer zugehörigen Auswerteeinheit 4 verbunden. Die Auswerteeinheiten 4 können von einem einzigen Mikroprozessor gebildet werden.

Über einen Taktgeber 5 wird die Versorgungsspannung des Überwachungsschalters 1'' getaktet. Die Taktung kann über den als Auswerteeinheit 4 dienenden Mikroprozessor vorgenommen werden, der beispielsweise einen entsprechenden Transistor des Taktgebers 5 ansteuert. Jedenfalls ist der Taktgeber 5 mit der dem getakteten Überwachungsschalter 1'' zugeordneten Auswerteeinheit 4 zur Taktübermittlung gekoppelt.

Die Auswertung der Ausgänge der Überwachungsschalter 1', 1'' erfolgt zur Überwachung des Zustands der Schutzabdeckung (geöffnet oder geschlossen) bei geschlossener Schutzabdeckung derart, daß während der Phase, während der die Spannung am getakteten Überwachungsschalter 1'' null ist, das Vorliegen des Spannungspegels am nichtgetakteten Überwachungsschalter 1' und das Fehlen des Spannungspegels am getakteten Überwachungsschalter 1'' festgestellt wird.

Liegt ein Querschluß vor, kann der Spannungspegel am getakteten Überwachungsschalter 1'' nicht null werden. Dann wird ein Fehlersignal erzeugt.

Anstelle des Taktens des einen Überwachungsschalters 1'' können auch beide Überwachungsschalter 1', 1'' getaktet sein, wobei dann die Taktung entsprechend zeitversetzt sein muß, damit immer ein Überwachungsschalter spannungsbeaufschlagt ist, während der andere infolge der Taktung spannungslos ist.

Bei einer Gruppe aus Überwachungsschaltern, die sich bei Betätigung schließen, ist die Anordung und Taktung entsprechend.

Wenn die Gruppe n bei Betätigung öffnende oder schließende Überwachungsschalter mit n>3 umfaßt, sind mindestens ein oder auch alle Überwachungsschalter zu takten, wobei die Überwachung etwa im Zeit- und/oder Frequenzmultiplexbetrieb erfolgen kann, wenn mindestens zwei Überwachungsschalter getaktet werden. Gesellt sich zu den Überwachungsschaltern, die bei Betätigung öffnen bzw. schließen, noch einer, der umgekehrt arbeitet, also schließt bzw. öffnet, kann ein Querschluß zu dem letzteren über das dabei auftretende gleiche Potential oder über den dabei auftretenden Kurzschluß erkannt werden.

Die Taktung kann beispielsweise derart erfolgen, daß der Überwachungsschalter 1'' für 100 ms mit der Versorgungsquelle 2 verbunden ist und dann diese Verbindung für 1 ms unterbrochen wird. Die Taktung kann aber auch in jeder beliebigen anderen Weise erfolgen.

Ist mehr als eine Gruppe von Überwachungsschaltern vorhanden und zu überwachen, wird zweckmäßigerweise im Zeit- und/oder Frequenzmultiplex gearbeitet, wobei jeweils mindestens ein Überwachungsschalter 1'' jeder Gruppe von Überwachungsschaltern 1', 1'' getaktet wird, wobei zugleich ein Mikroprozessor als Auswerteeinheit 4 pro Gruppe oder insgesamt zur Anwendung gelangen kann.

## Patentansprüche

1. Überwachungseinrichtung mit wenigstens einer Gruppe von n (n>1) bei Betätigung öffnenden oder schließenden Überwachungsschaltern (1', 1''), die jeweils an eine elektrische Versorgungsquelle (2) angeschlossen und mit mindestens einer auf den jeweiligen Schalterausgang ansprechenden Auswerteeinheit (4) gekoppelt sind, dadurch **gekennzeichnet,** daß die Spannungsversorgung von mindestens einem Überwachungsschalter (1', 1'') jeder Gruppe über jeweils einen Taktgeber (5) getaktet ist, wobei die Auswerteeinheit(en) (4) die durch den entsprechenden Taktgeber (5) bewirkte Potentialänderung des Ausgangs des getakteten, geschlossenen Überwachungsschalters (1'') auf den gleichzeitig auf Spannung liegenden Ausgang des wenigstens einen weiteren Überwachungsschalters (1') überprüft.

2. Überwachungseinrichtung nach Anspruch 1, dadurch gekennzeichnet, daß eine ordnungsgemäße Funktion der Überwachungsschalter feststellbar ist, wenn während der Phasen, in denen die Taktung die Verbindung zwischen dem getakteten Überwachungsschalter (1'') und der zugehörigen Versorgungsquelle (2) unterbricht, von den Auswerteeinheiten (4) das Vorliegen des Spannungspegels am nichtgetakteten Überwachungsschalter (1') und das Fehlen des Spannungspegels am getakteten Überwachungsschalter (1'') festgestellt wird.

3. Überwachungseinrichtung nach Anspruch 1 oder 2, dadurch gekennzeichnet, daß die Auswerteeinheit(en) (4) ein Mikroprozessor ist.

4. Überwachungseinrichtung nach Anspruch 3, dadurch gekennzeichnet, daß der Mikroprozessor den jeweiligen Taktgeber (5) steuert.

5. Überwachungseinrichtung nach einem der Ansprüche 1 bis 4, dadurch gekennzeichnet, daß bei mehr als zwei Überwachungsschaltern (1', 1'') im Zeit- und/oder Frequenzmultiplexbetrieb gearbeitet wird.
